# EUROPEAN PATENT APPLICATION

(11) **EP 3 041 149 A1**
(43) Date of publication of application: **06.07.2016**
(21) Application number: 14307198.3
(22) Date of filing: 29.12.2014
(51) Int. Cl.: H04B 1/403

(54) **Antenna switching arrangement and corresponding device**

(71) Applicant: Thomson Licensing, 92130 Issy-les-Moulineaux (FR)
(72) Inventor: Le Naour, Jean-Yves, 35576 Cesson-Sévigné (FR); Salou, Frédérique, 35576 Cesson-Sévigné (FR); Launay, Philippe, 35576 Cesson-Sévigné (FR)
(74) Representative: Huchet, Anne

(57) **Abstract**

An antenna switching arrangement for a mobile device and a mobile device comprising the antenna switching arrangement. The arrangement comprises multiple radio frequency switches that are operably configured to couple either an internal antenna and/or an external antenna to a set of receivers and/or transmitters in the mobile device for indoor or outdoor operation.

## Description

### 1. Technical field.

The present disclosure generally relates to reception and transmission for receiver/transmitters for combined indoor and outdoor use.

### 2. Technical background.

The 4G/LTE (Fourth Generation - Long Term Evolution) technology (further referred to as 'LTE') and its different variants ('Double Speed 4G' or '4G+', 'LTE-A' where 'A' stands for Advanced, 5G) brings broadband mobile services to mobile communication devices such as smartphones, tablets and laptops. Using this technology, users have access to high bandwidth demanding applications such as high definition mobile TV, video conferencing, high-quality video streaming and video file download. However, use of these bandwidth-demanding applications is only possible when reception conditions are good. Indoor coverage is often poor due to through-wall propagation losses. Low-energy buildings have metal-oxide coated windows ('low-E windows') that block infrared radiation. While these types of new materials efficiently contribute to energy savings in terms of heating and cooling, they also attenuate radio frequency signals as an undesired side-effect. The poor indoor reception does not allow taking advantage of the very services where the LTE technology was originally developed for. To solve this problem, service providers propose automatic switching to an indoor WiFi network, or adding indoor signal boosters or hotspots. These are two solutions that are discussed in the following. The first solution requires the service provider to provide the services it proposes through the LTE network to the client also on the Internet via a gateway of the service provider. This requires important investments on the provider side. It is further difficult, if not impossible to implement for roaming users since not every home/office has an indoor WiFi network and access to the indoor network is generally protected so that authentication is needed. The second solution does not have some of the disadvantages of the first solution but remains rather unsatisfying from perspectives of additional cost and increased energy consumption. Additional 'always on' devices that are part of the second solution are needed in every space of the home/office or other building where LTE reception is insufficient, which conflicts with the low-energy requirements in general and is particularly undesirable in low-energy buildings.

It would therefore be desirable to have a device and method for improvement of LTE indoor reception/transmission that does not have the disadvantages of prior art solutions.

### 3. Summary.

The present disclosure aims at alleviating some of the inconveniences of prior art.

To this end, the present principles comprise an antenna switching arrangement for a mobile device. The arrangement comprising at least a first radio frequency receiver and at least a second radio frequency receiver. The arrangement further comprises a first radio frequency switch having a common pole connected to a radio frequency signal input of the first radio frequency receiver, the first radio frequency switch being operably configured to couple, in a first position, the radio frequency signal input of the first radio frequency receiver to an external antenna connection, or, in a second position, to couple the first radio frequency receiver to an internal antenna. The arrangement further comprises a second radio frequency switch having a common pole connected to a radio frequency input of the second radio frequency receiver, the second radio frequency switch being operably configured to couple, in a first position, the radio frequency input of the second radio frequency receiver to the common pole of the first radio frequency switch, or in a second position, to the internal antenna.

According to a variant embodiment of the antenna switching arrangement, the arrangement further comprises a third radio frequency switch, operably configured to couple, in a first position, a radio frequency transmitter, configured to cooperate with the second radio frequency receiver, to the external antenna, and the third radio frequency switch being further operably configured to couple, in a second position, the radio frequency transmitter to a second internal antenna.

According to a variant embodiment of the antenna switching arrangement, the first radio frequency switch and the third radio frequency switch are operably coupled for synchronized switching of position.

According to a variant embodiment of the antenna switching arrangement, the arrangement further comprises a phase inverter operably coupled to the radio frequency signal input of the first radio frequency receiver and operably coupled to a radio frequency signal transmission output of the radio frequency transmitter, for adding a phase inverted version of a radio frequency transmission signal transmitted by the radio frequency transmitter to the radio frequency signal input of the first radio frequency receiver.

According to a variant embodiment of the antenna switching arrangement, the arrangement further comprises a control unit that is operably configured to set the radio frequency switches as a function of a reception quality of at least one radio frequency signal received by the first and/or the second radio frequency receiver.

According to a variant embodiment of the antenna switching arrangement, the arrangement further comprises a control unit that is operably configured to set the radio frequency switches as a function of a detection of a connection of an external antenna to the device.

According to a variant embodiment of the antenna switching arrangement, the third radio frequency switch is operably coupled to the control unit for setting the third switch in the first position when the radio frequency transmitter comprised in the second radio frequency receiver is active during reception of the first radio frequency receiver, and for setting the third switch in the second position otherwise.

The present disclosure also relates to a device comprising an antenna switching arrangement according to any of the above embodiments.

### 4. List of figures.

More advantages of the present principles will appear through the description of particular, non-restricting embodiments of the disclosure. In order to describe the manner in which the advantages of the present principles can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure.

The exemplary embodiments will be described with reference to the following figures:
Figure 1 a is a first configuration of a first example embodiment of a hybrid device according to the present principles.
Figure 1b is a second configuration of the first example embodiment.
Figure 1c is a third configuration of the first example embodiment.
Figure 2a is a first configuration of a second example embodiment.
Figure 2b is a second configuration of the second example embodiment.
Figure 2c is a variant embodiment of the second example embodiment.
Figure 3 is a third example embodiment.
Figure 4 is a radiation diagram of antennas suited for use as external antennas according to the present principles.

### 5. Detailed description.

With the transition of analog to digital television broadcast technology, parts of the electromagnetic spectrum are freed. This is commonly referred to as the 'digital dividend'. The freed frequencies are usually located at frequency bands from 174 to 230 MHz (VHF, for Very High Frequency) and from 470 to 862 MHz (UHF, for Ultra High Frequency). Location and size of the digital dividend varies among countries. The digital dividend has gained a particular interest of mobile communication operators as there is a need for additional frequencies for providing additional services. The VHF/UHF bands provide good coverage in rural areas. Particularly interesting for the present principles is the allocation of LTE frequencies in the upper UHF band (790-862MHz), as the UHF band is also used for Digital Terrestrial Television (DTT). Indoor DTT receivers commonly use an external (e.g. roof) antenna that was previously used for analog television reception.

For a device according to the present principles, the sharing of the UHF band as for example between LTE and DTT allows to improve indoor/outdoor transmission/reception while optimizing energy consumption and cost. A device according to the present principles is for example a nomadic Set Top Box (STB) for combined indoor/outdoor use, a tablet PC, a laptop PC or a smartphone.

In the following, the abbreviations 'RX', 'TX' and 'NC' are used, meaning respectively reception, transmission and not connected.

In the following, the term DTT is used. The term is used to comprise digital terrestrial television according to for example DVB-T, DVB-T2, ISDB-T, ATSC or DTMB for respectively Digital Video Broadcasting - Terrestrial, Digital Video Broadcasting - Second Generation Terrestrial, Integrated Services Digital Broadcasting, Advanced Television Systems Committee, and Digital Terrestrial Multimedia Broadcast.

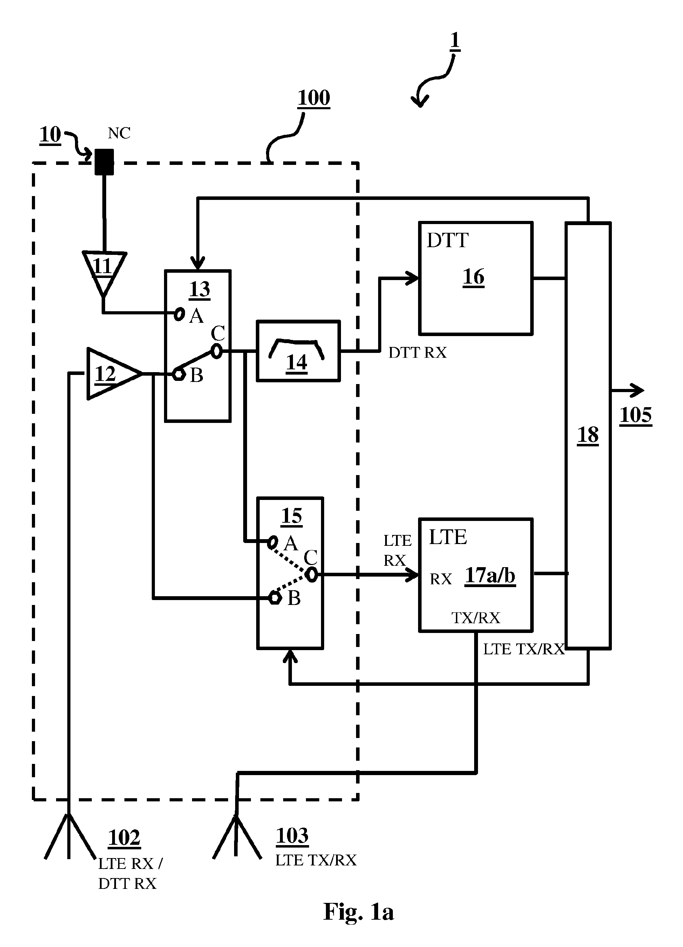

**Figure 1a** is a first configuration of a first example embodiment of a device according to the present principles. The device is for example a hybrid LTE / DTT STB. The device 1 comprises a Front End 100, a DTT receiver 16, a LTE receiver/transmitter 17, where 17a is the receiver part, and 17b the transmitter part, and a signal processing / control unit 18. The front end 100 comprises two RF switches 13 and 15 or high-frequency switches, i.e. switches that are particularly suitable for switching high-frequency RF signals, each having two possible positions indicated by the letters A and B, two LNA's (Low Noise Amplifier) 11 and 12, a BPF (Band Pass Filter) 14. Signal processing/control unit 18 handles demodulated signals that are output from the LTE / DTT receivers 16 and 17 and outputs an output signal 105 for a digital television, e.g. according to HDMI (High Definition Multimedia Interface). In this embodiment, the signal processing / control unit 18 also controls the setting of the RF switches 13 and 15. Two internal (embedded) antennas 102 and 103 are connected to the device 1. A first internal antenna 102 is used for LTE and DTT reception. A second internal antenna 103 is used for LTE reception and transmission. The use of two separated internal antennas allows for LTE improved reception using Multiple Input and Multiple Output (MIMO). The role of the BPF 14, also referred to as LTE band rejection filter, is to further reduce the DTT signal reception being perturbed by a simultaneous LTE transmission due to interference caused by the proximity of the internal antennas and the proximity of the transmission and reception frequencies. The internal antennas 102 and 103 are for example stamped metal antennas that are printed on a same PCB (Printed Circuit Board) of the device 1. With the position of the RF switches as illustrated, i.e. switch 13 in position 13B and switch 15 in any position 15A or 15B, the internal antenna 102 serves for both DTT and LTE reception. There is no external antenna connected to the external antenna connector 10 of the device 1. This configuration is typically suitable for outdoor use of the device 1.

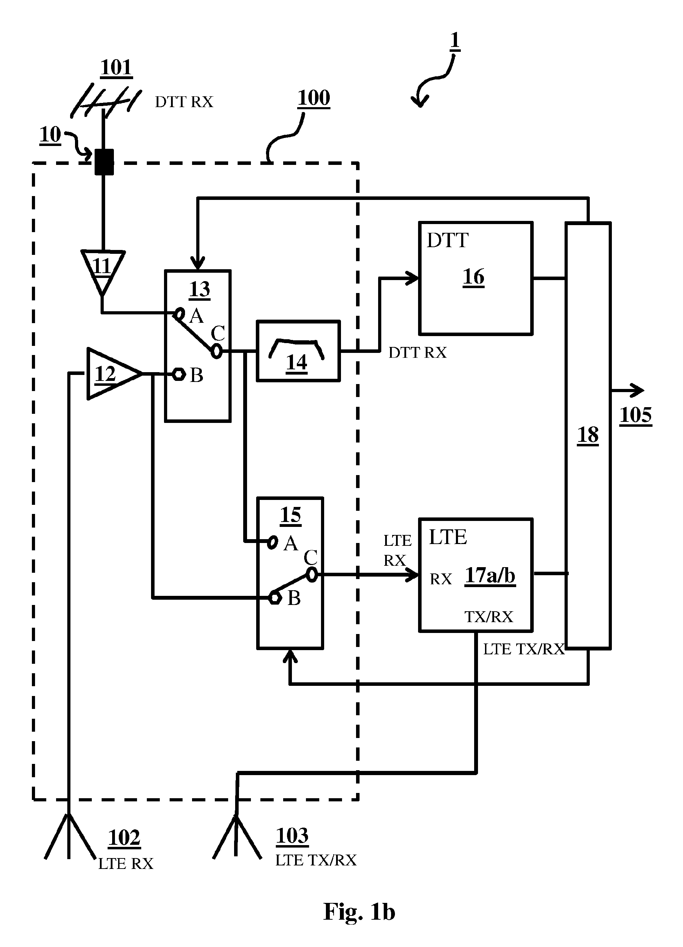

**Figure 1b** illustrates a second configuration of the first example embodiment of the device 1. With the position of the RF switches 13 and 15 set as illustrated, i.e. switch 13 in position 13A and switch 15 in position 15B, the device 1 is configured to have the DTT receiver 16 receiving RF signals from an external antenna 101, while the internal antennas 102 and 103 are connected to the LTE receiver/transmitter 17. This configuration is suitable for indoor use when indoor LTE reception is sufficient or not used. In this configuration, the DTT receiver 16 receives advantageously its signal from the external antenna 101.

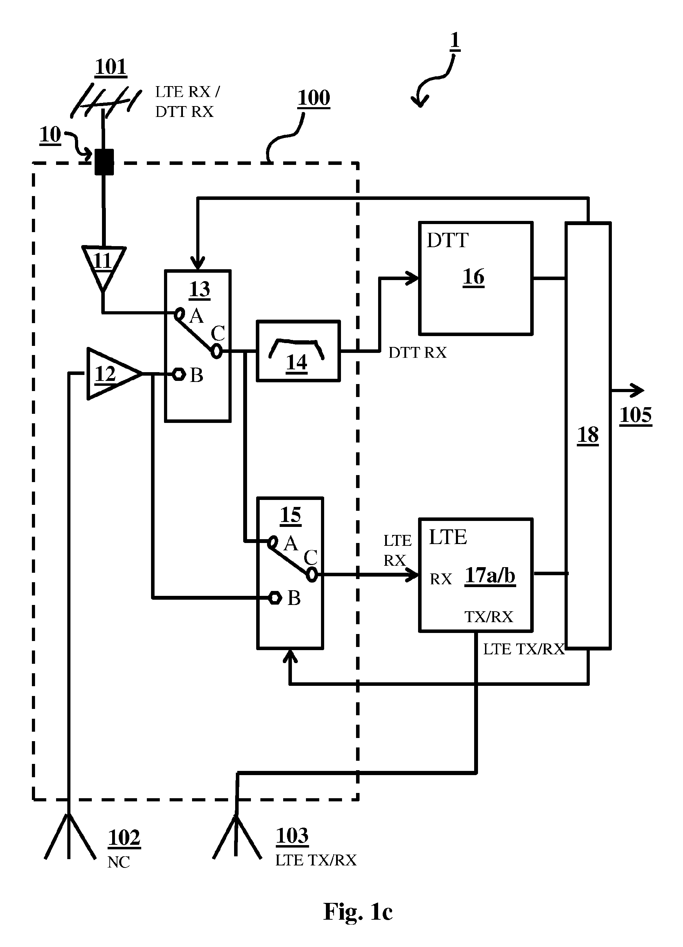

**Figure 1c** illustrates a third configuration of the first example embodiment of the device 1. With the position of the RF switches 13 and 15 set as illustrated, i.e. both switches 13 and 15 in position 13A/15A, both the LTE receiver of LTE receiver/transmitter 17 and the DTT receiver 16 are connected to the external antenna 101. The LTE transmitter remains connected to the internal antenna. This configuration is suitable for indoor use when indoor LTE reception is insufficient.

In the configurations illustrated by figures 1b-c, the LTE transmission signal interferes less with the DTT reception signal than in the configuration of figure 1a because the DTT reception antenna and the LTE transmission antenna are no longer at direct proximity. According to a variant embodiment (not shown), the BPF 14 is bypassed in this configuration of the switches 13 and 15, which improves the reception quality of the DTT signal because the BPF 14 slightly attenuates the DTT reception signal, in particular at frequencies that are close to the LTE frequencies that are filtered by it.

According to the first embodiment illustrated in figures 1a-c, the LTE transmitter 17b is always connected to the internal antenna 103. The use of the internal antenna for LTE transmission under poor LTE reception conditions is possible because the device can to a certain extent increase the LTE transmission power (while it cannot influence on the power of the LTE/LTE signal received). Thus, according to a variant embodiment of the first embodiment, when indoor LTE reception is poor, the device 1 can set switches 13 and 15 in the position depicted by figure 1c so that the LTE RX signal is received from the external antenna 101, and increase the power of the LTE TX signal that uses the internal antenna 103, to increase the chances of good reception of the LTE transmission signal by the LTE base station. Of course, the increasing of transmission power will also increase the power consumption of the device 1. Use of an external power supply for indoor use can cope with a requirement for increased power supply.

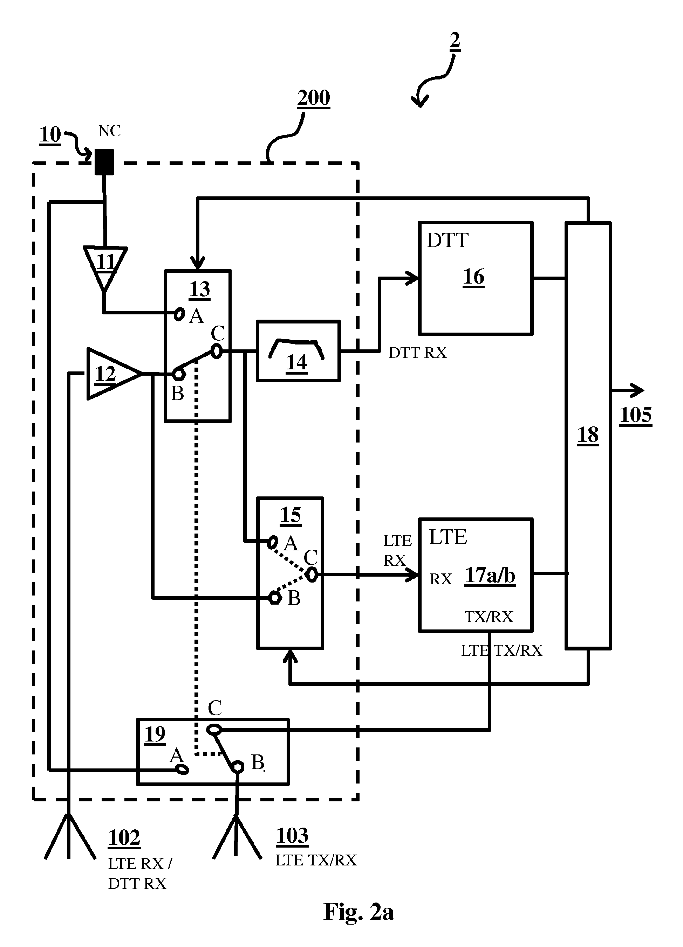

**Figure 2a** illustrates a first configuration of a second embodiment of a device according to the present principles that allows the use of the external antenna 101 also for LTE transmission. The device 2 comprises a front end 20 with an additional RF switch 19 with two positions 19A and 19B. The operation of the switch is coupled to the operation of switch 13 as is indicated by the broken line between the switches: if switch 13 is in position 13A, switch 19 is in position 19A; if switch 13 is in position 13B, switch 19 is in position 19B. In the depicted configuration, both switches are set in position B, so that the internal antennas 102 and 103 are used for DTT reception, LTE reception, and LTE transmission, whereby one of the internal antennas (102) is shared between DTT and LTE reception, and the other internal antenna (103) is used for LTE transmission and reception. When switch 13 is in position 13B, switch 15 can take any position 15A or 15B. This configuration is advantageous for outdoor use.

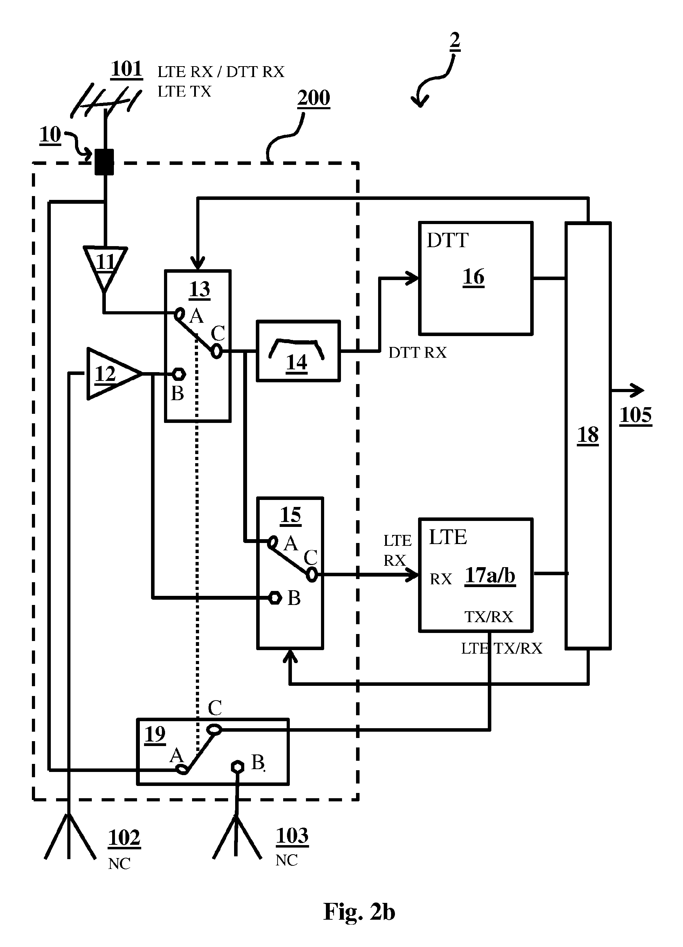

**Figure 2b** illustrates a second configuration of the second embodiment of the device 2 according to the present principles, with switches 13 and 19 set in position A. Switch 15 is set in position 15A, i.e. connection of LTE RX to external antenna 101. In this configuration, the external antenna is used for combined LTE reception/transmission and DTT reception. This configuration is advantageous for indoor use. Good DTT reception during LTE transmission may not be guaranteed in the configuration of figure 2a-b; the presence of a relatively strong LTE transmission signal may mask any DTT reception signal completely or cause interferences in the DTT radio frequency signal destined to the DTT receiver 16. This can lead to black screens or display artefacts known as macro blocking. The interference of the LTE transmission with the DTT reception depends on the frequency spacing between the LTE transmission signal and the DTT reception signal and depending on their respective transmission/reception power ratio.

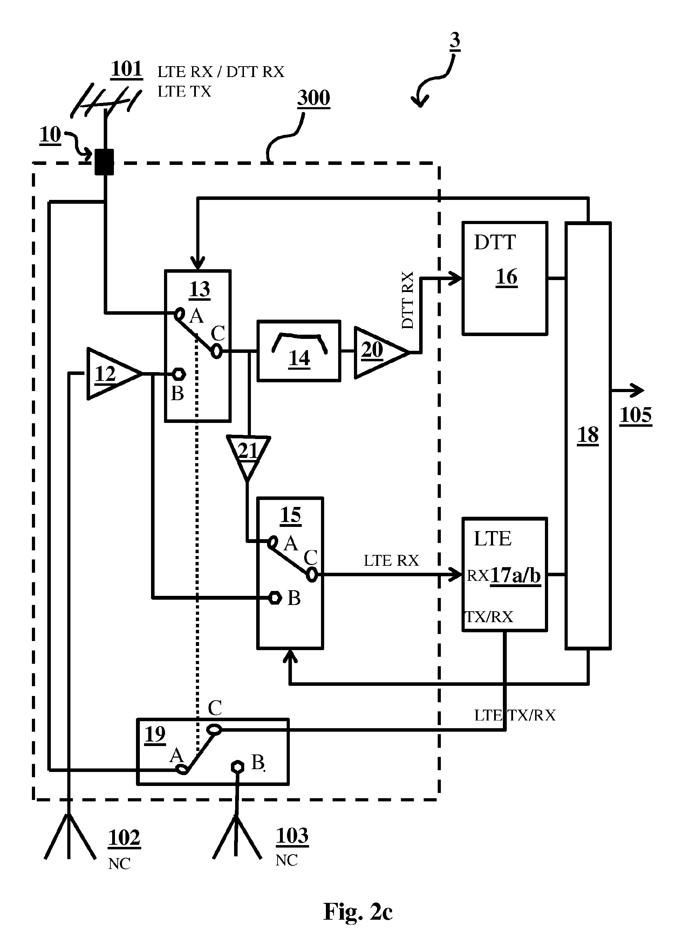

**Figure 2c** is a further variant embodiment of a device according to the present principles that we will refer to as device 3, and that further reduces interference between LTE transmission and simultaneous DTT reception. The embodiment of figure 2c advantageously allows a continuous use of the external antenna 101 for the LTE transmission without interfering with a simultaneous DTT reception that also uses the external antenna 101. In front end 300 of device 3, the LNA 11 that is present in front end 200 of device 2 is removed and is replaced by two LNA's 20 and 21, so that for DTT reception, the unamplified RF signal from the external antenna 101 enters LTE band rejection filter 14. Only when the RF signal has passed the LTE band rejection filter and the LTE signal has been filtered out, it is amplified by LNA 20. The LTE reception signal coming from the external antenna is amplified through LNA 21. According to a variant embodiment of device 3, the LNA 21 is not present if LTE reception is sufficient without amplification due to the gain of using the external antenna 101 instead of using the internal antennas 102 and 103.

In the second embodiment, the operation of the switches 13 and 19 is synchronized. This allows for a simple operation by the signal processing / control unit 18.

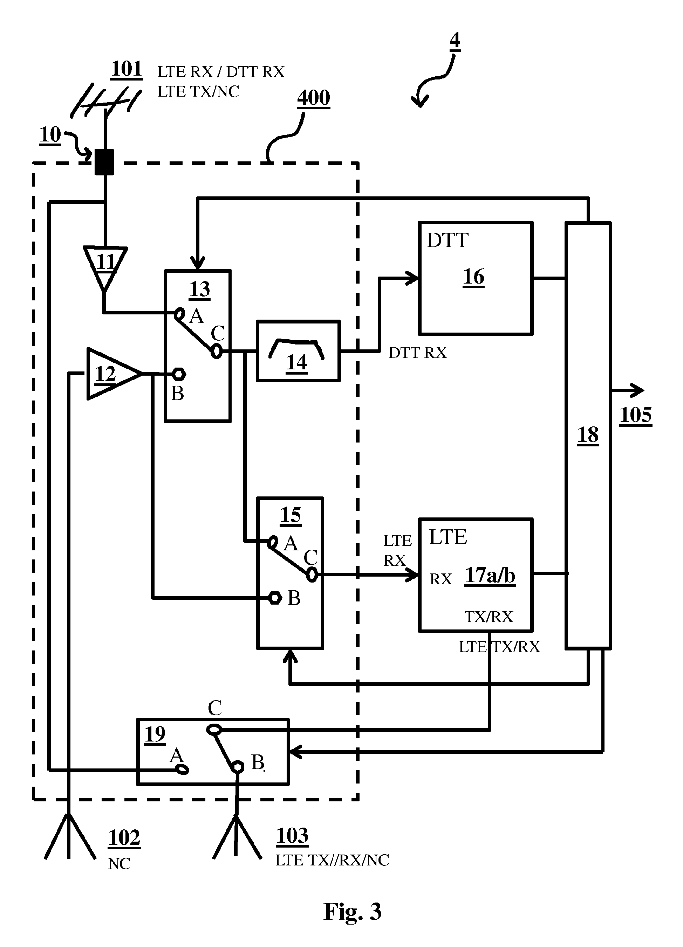

**Figure 3** is a third embodiment of a device 4 according to the present principles that reduces interference between LTE transmission and simultaneous DTT reception. In this embodiment a front end 400 comprises switches 13 and 19 that are not coupled but are independently controlled by controller 18, so that the LTE transmitter is switched to use the internal antenna 103 during a LTE transmission that is simultaneous with a DTT reception, while the LTE transmitter uses the external antenna 101 otherwise.

According to a further variant embodiment (not shown) for avoiding interference between LTE transmission and simultaneous DTT reception and thereby allowing simultaneous LTE transmission and DTT reception using a same antenna, the LTE transmission signal that is present in the DTT reception signal is removed from the DTT reception signal by an active noise cancelling method. This active noise cancelling method is based on phase inversion (or 180°phase shifting, which is the sam e) of the LTE transmission RF signal an injection of the phase-inverted LTE transmission RF signal in the RF signal destined to the DTT receiver 16. The phase-inverted LTE transmission signal acts as a noise cancelling signal that cancels the presence of the LTE transmission RF signal in the DTT reception signal. An additional LTE band rejection filter 14 in the path to the DTT receiver 16 may or may not be used to filter out any remaining LTE RF signals. In this embodiment, additional measures are taken to avoid that the noise cancelling signal is injected in the LTE transmission signal that is output on the external/internal antenna 101/102/103, for example by means of an RF circulator that is used as a duplexer.

According to a further variant embodiment (not shown), an RF signal attenuator is inserted between the connection of pole 19A of switch 19 and the external antenna 101. Alternatively an RF attenuator is not used/present and controller 18 of the device reduces LTE transmission power when DTT reception is ongoing. The signal processing / controller unit may throttle the maximum transmission power according to a detected capacity of the LTE transmitter to contact the base station; for example, starting from a lowest possible transmission power level and stepwise increasing transmission power until it is determined from the LTE reception that the base station has been contacted successfully. These variant embodiments, RF signal attenuator or throttling of LTE transmission power by the signal processing / control unit, reduce the emission power of LTE transmissions via the external antenna. The use of an RF signal attenuator or RF signal power throttling provides at least the advantages of 1) keeping the transmission power level below a maximum legally allowed level (the use of an external antenna instead of an internal antenna increases the power of the LTE transmission at a level that exceeds the maximum legally allowed level, particularly in the zone where the antenna is directed to if the external antenna is a directive antenna); 2) to further reduce interference with any simultaneous DTT reception in the device; and 3) reduce power consumption of the device.

As a further variant embodiment of any of the above described embodiments, the device comprises only one internal antenna that can be used for both LTE TX/RX and DTT RX.

### Control of the switch positions

The switch positions 13, 15 and 19 are controlled by the signal processing/control unit 18 as indicated by the arrows that come from the signal processing/control unit 18 and that go to the switches 13, 15 and 19.

According to a particular embodiment, the signal processing/ control unit controls the position of the switches 13, 15 and 19 as a function of a detecting of a connection of the device 1, 2, 3 or 4 to an external antenna 101. In this embodiment the signal processor / control unit 18 is informed of a connection of the device 1, 2, 3 or 4 to an external antenna 101.

According to a variant embodiment that does not require the signal processor / control unit 18 to be informed of a connection of the device 1, 2, 3 or 4 to an external antenna 101, the signal processing/control unit 18 monitors the reception quality of the RF signals received and sets the positions of the switches 13, 15 and 19 according to the reception quality observed. The reception quality can be determined in different ways, for example, by measuring signal to noise ratio (SNR), Carrier to Noise Ratio (CNR), by measuring a Bit Error Rate BER, and additionally Received Signal Strength Indication (RSSI), Reference Signal Received Power (RSRP), or Reference Signal Received Quality (RSRQ).

For example, with regard to the first embodiment of fig.1a-c:
- (indoor use) if the control unit 18 determines that DTT reception quality from DTT receiver 16 is below a defined level, the control unit 18 sets switch 13 in position 13A, which switches the RF input of the DTT receiver 16 from the internal antenna 102 to external antenna 101. With switch 13 in position 13A, the position of switch 15 is independently decided by the control unit 18: if the LTE reception quality level from LTE receiver 17a is below a defined level, the control unit 18 sets switch 15 into position 15A (corresponding to the configuration of fig. 1c), otherwise in position 15B (corresponding to the configuration of fig. 1 b). In position 15A, the external antenna 101 is coupled to the LTE receiver 17a; in position 15B, the internal antenna 102 is coupled to the LTE receiver 17a.
- (outdoor use) If the control unit 18 determines that DTT reception quality from DTT receiver 16 is above the defined level, the control unit 18 sets switch 13 in position 13B (corresponding to the configuration of fig. 1a), so that the internal antenna 102 is coupled to the RF input of DTT receiver 16. Now switch 15 can keep indifferently any position 15A or 15B as in either position the LTE receiver 17a is coupled to the internal antenna 102.

For example, with regard to the second embodiment of fig. 2a-c:
- (indoor use) If the control unit 18 determines that DTT reception quality level is below a defined level, it sets switch 13 in position 13A, which couples the external antenna 101 to DTT receiver 16. As switches 13 and 19 are operably coupled (their operation is synchronized), switch 19 consequently takes position 19A, thereby coupling the LTE transmitter 17b (and the second antenna of the LTE receiver 17a) to the external antenna 101. With switches 13 and 19 in position A, switch 15 is operated independently. If the control unit 18 determines that the LTE reception by LTE receiver 17a is insufficient, the control unit 18 sets switch 15 in position 15A thereby coupling the LTE receiver 17a to the external antenna 101 (configuration that corresponds to fig. 2b), otherwise it sets switch 15 in position 15B, thereby coupling the LTE receiver 17a to internal antenna 102 (configuration not illustrated).
- (outdoor use) If the control unit 18 determines that DTT reception quality level is above the defined level, it sets switch 13 in position 13B. Consequently, switch 19 is set in position B as the switches are coupled. In this configuration, the position of switch 15 is unimportant. The configuration of the switches corresponds to fig. 2a. In this configuration, both the DTT receiver and the LTE receiver use the internal antenna(s).

The switches 13, 15 and 18 are not necessarily operated by a signal processing /control unit 18 as depicted, other types of components such as a central processing unit; according to a variant embodiment a signal comparator can operate the switches 13, 15 and 19 according to the present principles. According to a further variant embodiment, the switch operation is controlled directly by the DTT receiver 16 and/or the LTE receiver/transmitter 17. According to a further variant embodiment, the operation of the switches is subordinated to a detected connection of the device to an external antenna: if a connection to an external antenna is not detected, the switches are not set in a position where the external antenna is used, even if the DTT/LTE reception quality level is below the defined level when using the internal antennas. Thus, if the DTT/LTE reception quality level is below the defined level and the internal antenna(s) is(are) used, the switches are only set in a position where the external antenna is used if a connection to an internal antenna is detected. As a further variant embodiment, a user of the device is prompted with a message on a display of the device indicating that reception of radio signals is insufficient, and that prompts the user to connect the device to an external antenna if the device is used indoor and an external antenna is available.

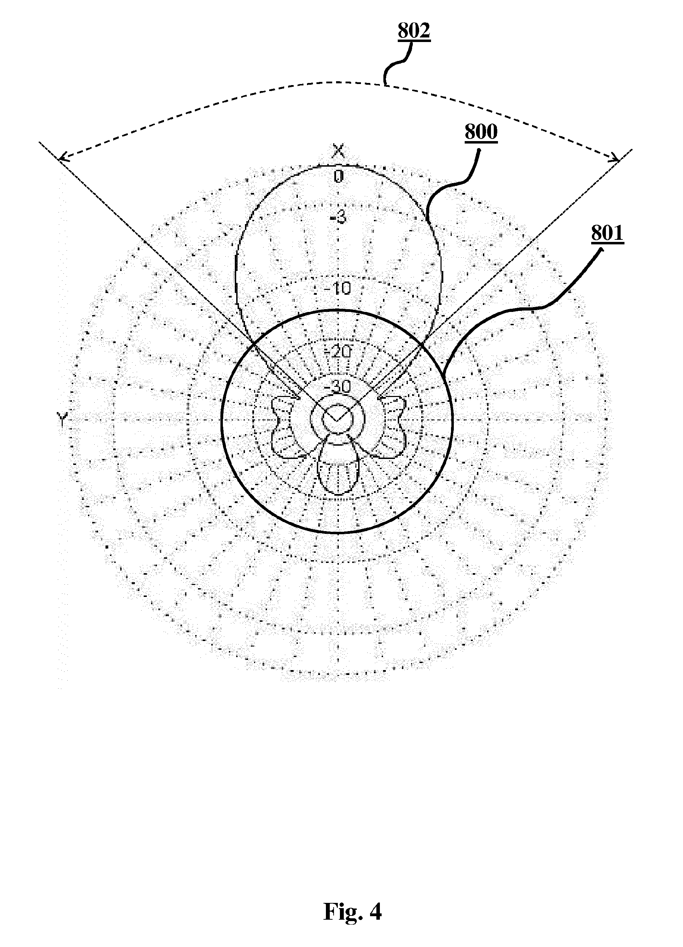

**Figure 4** is a gain diagram of a Yagi directional external antenna 800 superposed on a gain diagram of an omnidirectional antenna 801, which illustrates that a directional antenna can provide a gain that is comparable to that of an omnidirectional antenna over a relative wide opening angle. This feature is exploited by the present principles for LTE transmission that is possibly destined to a base station that is not aligned with the DTT transmitter to which the antenna is pointed to; if the base station is within the opening angle 802, the gain of the directional antenna is comparable or better than that of an omnidirectional antenna. For angles that are outside of angle 802, the gain of the directional antenna is less than that of an omnidirectional antenna, but can still be sufficient for communication with a LTE base station due to the favorable position of the external antenna e.g. outside, rooftop, etc.

Some elements in the drawings may not be used or be necessary in all embodiments. Some operations may be executed in parallel. Other variant embodiments than illustrated and/or described are possible, such as embodiments where the signal processing unit is separated from the control unit.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. An antenna switching arrangement for a mobile device (1,2,3,4), comprising at least a first radio frequency receiver (16) and at least a second radio frequency receiver (17a), wherein the arrangement comprises:
a first radio frequency switch (13) having a common pole (13C) connected to a radio frequency signal input of said first radio frequency receiver, said first radio frequency switch being operably configured to couple, in a first position (13A), said radio frequency signal input of said first radio frequency receiver (16) to an external antenna connection (10), or, in a second position (13B), to couple said first radio frequency receiver to an internal antenna (102); and
a second radio frequency switch (15) having a common pole (15C) connected to a radio frequency input of said second radio frequency receiver, said second radio frequency switch being operably configured to couple, in a first position (15A), said radio frequency input of said second radio frequency receiver (17a) to said common pole (13C) of said first radio frequency switch, or in a second position (15B), to said internal antenna.

2. The antenna switching arrangement according to Claim 1, wherein the arrangement further comprises a third radio frequency switch (19), operably configured to couple, in a first position (19A), a radio frequency transmitter (17b), configured to cooperate with said second radio frequency receiver (17a), to said external antenna, and said third radio frequency switch being further operably configured to couple, in a second position (19B), said radio frequency transmitter to a second internal antenna (103).

3. The antenna switching arrangement according to Claim 2, wherein said first radio frequency switch (13) and said third radio frequency switch (19) are operably coupled for synchronized switching of position.

4. The antenna switching arrangement according to Claim 2, further comprising a phase inverter operably coupled to said radio frequency signal input of said first radio frequency receiver and operably coupled to a radio frequency signal transmission output of said radio frequency transmitter, for adding a phase inverted version of a radio frequency transmission signal transmitted by said radio frequency transmitter to said radio frequency signal input of said first radio frequency receiver.

5. The antenna switching arrangement according to Claim 1 to 4, further comprising a control unit (18) that is operably configured to set said radio frequency switches as a function of a reception quality of at least one radio frequency signal received by said first and/or said second radio frequency receiver.

6. The antenna switching arrangement according to Claim 1 to 4, further comprising a control unit (18) that is operably configured to set said radio frequency switches as a function of a detection of a connection of an external antenna to said device.

7. The antenna switching arrangement according to Claim 2, wherein said third radio frequency switch (19) is operably coupled to said control unit (18) for setting said third switch in said first position (19A) when said radio frequency transmitter comprised in said second radio frequency receiver is active during reception of said first radio frequency receiver, and for setting said third switch in said second position (19B) otherwise.

8. A device comprising an antenna switching arrangement according to any of the preceding claims.
